# EUROPEAN PATENT SPECIFICATION

(11) **EP 1 977 921 B1**
(45) Date of publication and mention of the grant of the patent: **09.12.2009**
(21) Application number: 08152313.6
(22) Date of filing: 05.03.2008
(51) Int. Cl.: B60J 7/00

(54) **Sunshade Apparatus For Vehicle**
Sonnenblendenvorrichtung für Fahrzeuge
Appareil de pare-soleil pour véhicule

(30) Priority: 07.03.2007 JP 2007057158
(43) Date of publication of application: 08.10.2008
(73) Proprietor: AISIN SEIKI KABUSHIKI KAISHA, Kariya-shi, Aichi 448-8650 (JP)
(72) Inventor: Sakai, Shinji, Aichi-ken 448-8650 (JP); Sawada, Kazuki, Kariya-shi, Aichi-ken 448-8605 (JP)
(74) Representative: Winter, Brandl, Fürniss, Hübner Röss, Kaiser, Polte Partnerschaft Patent- und Rechtsanwaltskanzlei

(56) References cited:
- EP-A- 1 612 074
- WO-A-90/00986
- DE-A1- 10 327 313

## Description

### FIELD OF THE INVENTION

The present invention relates to a sunshade apparatus for a vehicle. More specifically, the present invention relates to a sunshade apparatus for a vehicle having a plurality of movable sunshade panels.

### BACKGROUND

In a sunroof apparatus formed with an opening on a roof of a vehicle, a fixed panel or a movable panel formed with a transparent glass plate is provided at the opening on the roof. In order to adjust an amount of sunlight taken through the panel into a vehicle compartment, a known sunshade apparatus disclosed in, for example, DE10327313, is employed.

The sunshade apparatus disclosed in DE10327313 includes a guide groove for slidably guiding a plurality of sunshade panels, and a box-type sunshade storage provided at a rear end of the guide groove. The sunshade storage accommodates the plurality of the sunshade panels in a superposed state. When the sunshade panels are deployed from the sunshade storage to close the opening on the roof, the plurality of the sunshade panels are arranged so as to be flush with each other. In a process of accommodating the sunshade panels, each of the sunshade panels is slid up along an inclined guide provided within the sunshade storage, and then each of the sunshade panels is lifted up one by one to be accommodated within the sunshade storage.

Generally, in the sunshade apparatus for the vehicle, a spring is provided at the sunshade storage in a downward direction of the superposed sunshade panels in order to prevent backlash of the sunshade panels accommodated within the sunshade panel. Consequently, the superposed sunshade panels are pressed in the downward direction thereof by a spring force of the spring.

The spring needs to have sufficient spring force to prevent the backlash of the superposed sunshade panels even when the number of the sunshade panels accommodated within the sunshade storage is small. Hence, when all of the sunshade panels are accommodated within the sunshade storage, the spring is largely compressed. As a result, load applied to the sunshade panels becomes larger. Therefore, the sunshade panels are likely to be damaged.

Further, when the load applied to the sunshade panels becomes larger, a slide resistance generated between each sunshade panel when the sunshade panels are accommodated/deployed into/from the sunshade panel is also increased. Therefore, a driving force to move the sunshade panels to accommodate/deploy into/from the sunshade storage needs to be increased. However, when the driving force to move the sunshade panels is increased, noise is likely to be generated because of an increase of the slide resistance.

A need thus exists to provide a sunshade apparatus for a vehicle that prevents backlash of sunshade panels without providing a spring and the like at the sunshade apparatus for the vehicle. Specifically, the present invention prevents the backlash of the sunshade panels by providing a guide groove individually to each of the sunshade panels for accommodating/deploying the sunshade panels into/from a sunshade storage.

### SUMMARY OF THE INVENTION

According to an aspect of the present invention, sunshade apparatus for a vehicle includes a guide rail adapted to be mounted along a side edge of a light inletting portion formed at a vehicle roof and extending in a front-rear direction of the vehicle roof, a plurality of sunshade panels slidably supported at the guide rail so as to open/close the light inletting portion, and the plurality of sunshade panels arranged in a front-rear direction of the vehicle roof when the light inletting portion is closed, a dividing portion rotatably supported at a rear end portion of the guide rail, the dividing portion including a first guide portion for guiding an rear end portion of one of the plurality of sunshade panels arranged at a rearmost position of the light inletting portion in the front-rear direction thereof, and a second guide portion for guiding a rear end portion of the other one of the plurality of the sunshade panels positioned anterior to the one of the plurality of sunshade panels, and a guide mechanism provided at the guide rail for guiding a front end portion of each of the plurality of sunshade panels in an upward direction or in a downward direction of the vehicle roof.

Accordingly, the dividing portion is provided at the rear end portion of the guide rail so as to be rotatable around the axis. The dividing portion includes the first guide portion for guiding the rear end portion of one of the plurality of the sunshade panels positioned at the rear portion of the opening portion to the first guide groove, and the second guide portion for guiding the rear end portion of the other one of the plurality of the sunshade panels positioned anterior to the one of the plurality of the sunshade panels to the second guide groove. Further, the guide mechanism is provided at the guide rail for guiding each of the front end portions of the one of and the other one of the plurality of the sunshade panels to a direction corresponding to the guided direction of each of the rear end portions of the one of and the other one of the plurality of the sunshade panels. Hence, the guide grooves for accommodating the plurality of the sunshade panels are provided individually. As a result, backlash of the superposed sunshade panels are prevented even without providing a spring and the like. Therefore, unnecessary force is not applied to the sunshade panels.

According to another aspect of the present invention, the sunshade apparatus for the vehicle further includes a storage box supported at the rear end portion of the guide rail, wherein the first guide portion includes a first guide groove formed within the storage box, and the second guide portion includes a second guide groove formed within the storage box so as to be positioned below the first guide groove in the upward-downward direction of the vehicle roof.

According to a further aspect of the present invention, the dividing portion includes a dividing member rotatably supported around a horizontal axis extending in a width direction of the vehicle roof and is provided with the second guide groove. The dividing member forming the first guide groove with a wall portion of the storage box.

Accordingly, the dividing portion is formed with the dividing member in a bracket-shape in section and having the second guide groove. Further, the dividing member is rotatably supported centering on the horizontal axis extending in the widths direction of the vehicle roof. Hence, the plurality of the sunshade panels is separately accommodated within the first guide groove formed above the dividing member and the second guide groove formed by the dividing member.

According to a further aspect of the present invention, the guide rail includes a first groove and a second groove, which are arranged in parallel to each other in the upward-downward direction of the vehicle roof, the first groove slidably guides the front end portion of each of the plurality of the sunshade panels and is connected to the guide mechanism, and the second groove slidably guides the rear end portion of each of the plurality of the sunshade panels and is selectively connected to the first guide groove or to the second guide groove by a rotation of the dividing member.

Accordingly, the guide rail includes an upper groove and the lover groove extending in parallel to each other. One of the front and the rear end portions of the sunshade panels are slidably guided along the upper groove, and the other one of the front and the rear end portions of the sunshade panels are slidably guided along the lower groove. Therefore, the front end portions and the rear end portions of the plurality of the sunshade panels are separately guided. As a result, the sunshade panels are smoothly moved. Furthermore, the first and the second guide portions of the dividing portion are structured so as to superpose the plurality of the sunshade panels in the upward direction or in the downward direction relative to the upper and the lower grooves of the guide rail. Hence, the sunshade apparatus of the present invention is applicable to any types of the vehicle.

According to a further aspect of the present invention, the dividing portion includes a spring rotatably biasing the dividing member, and the first guide groove functions as an inclined passage connected to the second groove.

According to a further aspect of the present invention, the dividing portion includes a dividing member rotatably supported around a horizontal axis extending in the width direction of the vehicle roof, the dividing portion includes a dividing member for forming the first guide groove and the second guide groove between a wall portion of the storage box and an upper and a lower surfaces of the dividing member.

Accordingly, the dividing portion is formed with the dividing member rotatably supported centering on the horizontal axis extending in the width direction of the vehicle roof. Further, the first guide portion is formed on the upper surface of the dividing portion, and the second guide portion is formed on the lower surface of the dividing portion. Hence, the accommodating positions of the sunshade panels are easily divided into the upward position and the lower position by rotation of the dividing portion.

According to a further aspect of the present invention, the guide rail includes a groove portion slidably guiding the front and the rear end portions of each of the plurality of the sunshade panels, the groove portion is selectively connected to the first guide groove or to the second guide groove by the rotation of the dividing member, and the groove portion is connected to the guide mechanism.

Accordingly, the guide rail includes the guide groove along which the front and the rear end portions of the plurality of the sunshade panels are slidably guided. Hence, the sunshade panels slid along the guide groove are guided upward and downward in order to separately accommodate the sunshade panels at the upper position and the lower position relative to the guide groove of the guide rail. Hence, a moving distance of each of the sunshade panels in a height direction when the sunshade panels are in an opened state is set to be equal by separately accommodating the sunshade panels at the upper and the lower positions. Therefore, the sunshade apparatus of the present invention is less dependent on conditions of the vehicle to which the present invention is applied. In other words, the sunshade apparatus of the present invention is applicable to any types of vehicles.

According to a further aspect of the present invention, the dividing portion includes a spring rotatably biasing the dividing member so as to connect the groove portion and the second guide groove.

### BRIEF DESCRIPTION OF THE DRAWINGS

The foregoing and additional features and characteristics of the present invention will become more apparent from the following detailed description considered with reference to the accompanying drawings, wherein:

Fig. 1 is a view schematically illustrating a sunshade apparatus for a vehicle;

Fig. 2 is a view illustrating a deployed state of the sunshade apparatus for the vehicle according to the first embodiment;

Fig. 3 is a plane view illustrating sunshade panels according to the first embodiment;

Fig. 4 is a view illustrating sunshade storages of the sunshade apparatus viewed from an arrow 4 of Fig. 2;

Fig. 5 is a view illustrating a connecting mechanism for connecting a plurality of sunshade panels according to the first embodiment;

Fig. 6 is a cross sectional view taken along the line VI-VI of Fig. 5;

Fig. 7 is a view illustrating an operating condition of Fig. 4;

Fig. 8 is a view illustrating a guide rail of a sunshade apparatus for a vehicle according to a second embodiment;

Fig. 9 is a plane view illustrating a connecting mechanism for connecting the plurality of sunshade panels according to the second embodiment;

Fig. 10A is a cross sectional view taken along the line X-X of Fig. 9;

Fig. 10B is a cross sectional view; and

Fig. 11 is a view illustrating an operating condition of Fig. 8.

### DETAILED DESCRIPTION

### [First Embodiment]

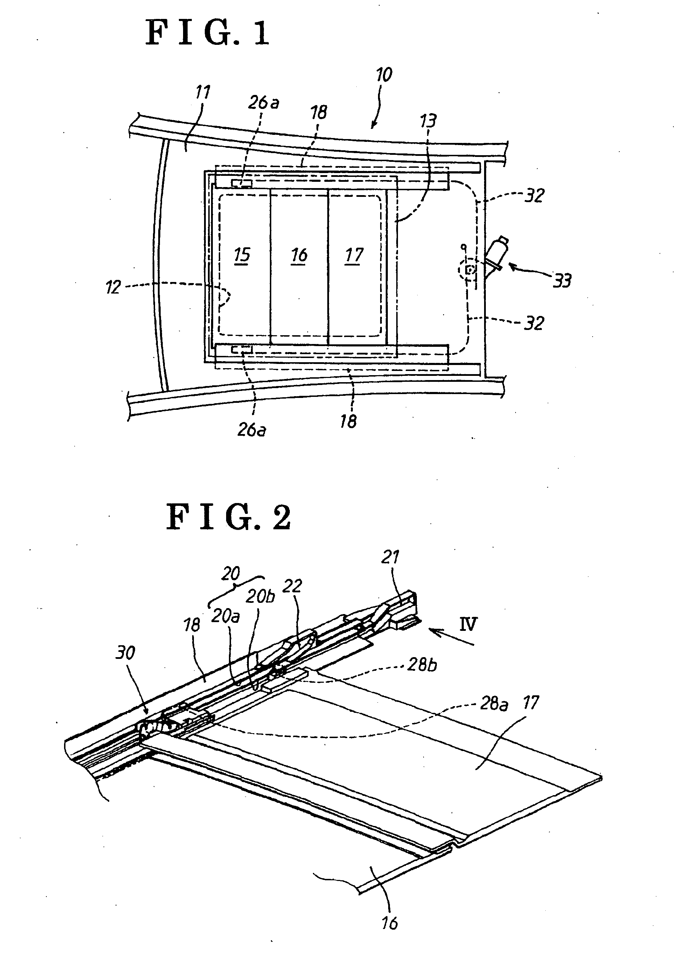

A first embodiment of the present invention will be described below in accordance with the attached drawings. Fig. 1 is a view schematically illustrating an entire configuration of a sunshade apparatus for a vehicle 10 (which is hereinafter referred to simply as a sunshade apparatus 10). An opening portion 12 is formed on a roof 11 of the vehicle (vehicle roof). A panel 13 formed with a transparent glass plate is provided at the opening portion 12 so that sunlight reaches a vehicle compartment through the panel 13. A plurality of sunshade panels for adjusting an amount of sunlight to be taken into the vehicle compartment are provided along an inner surface of the panel 13 facing the vehicle compartment. In this embodiment, three sunshade panels 15, 16 and 17 are provided along the inner surface of the panel 13. The opening portion 12 and the panel 13 form a light inletting portion formed at the roof 11.

Hereinafter, a sunshade panel arranged at a front portion of the opening portion 12 in front-rear direction of the vehicle is referred to as a first sunshade panel 15. A sunshade panel arranged at a rear portion of the opening portion 12 in the front-rear direction of the vehicle is referred to as a third sunshade panel 17. Further, a sunshade panel arranged between the first and the third sunshade panels 15 and 17 is referred to as a second sunshade panel 16.

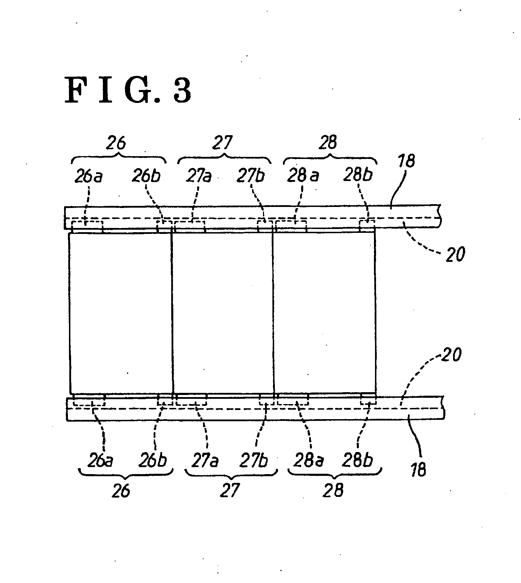

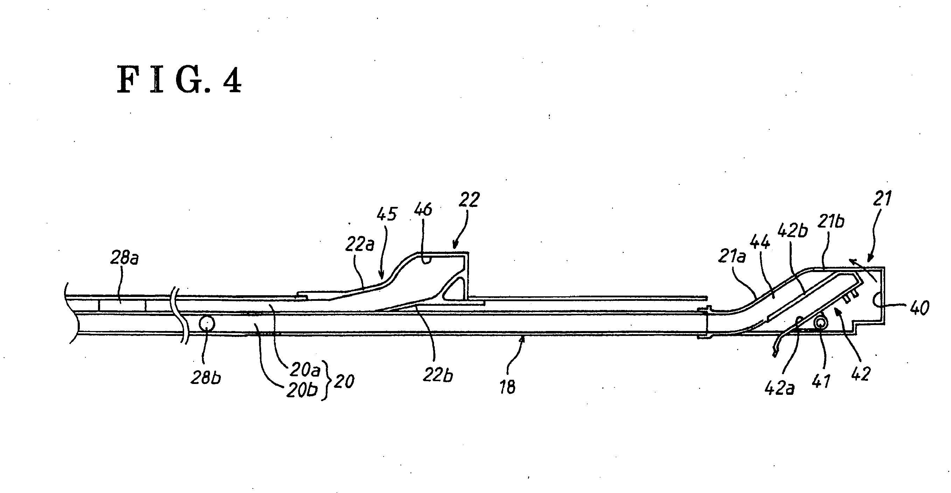

A pair of guide rails 18 is provided on the vehicle ceiling roof portion of the roof 11. Each of the guide rails 18 is arranged at each side of the opening portion 12 in a vehicle width direction so as to extend along the opening portion 12 in a front-rear direction of the vehicle. A groove portion 20 extending in the front-rear direction of the vehicle is formed on a surface of each guide rails 18 facing each other, as illustrated in Figs. 2 and 3. Additionally, each of the groove portion 20 is formed with an upper groove 20a (first groove) and a lower groove 20b (second groove). Further, the lower groove 20b is formed so as to extend along under the upper groove 20a in parallel therewith. A rear sunshade storage 21 is formed at an rear end portion of each of the lower grooves 20b in the front-rear direction of the vehicle so that the lower groove 20b continuously extends into the rear sunshade storage 21, as illustrated in Figs. 2 and 4. On the other hand, a front sunshade storage 22 is formed at a rear end portion of each of the upper grooves 20a in the front-rear direction of the vehicle so that the upper groove 20a continuously extends to into the front sunshade storage 22. The front sunshade storage 22 continuously extending to the upper groove 20a is arranged at a position spaced away from the rear sunshade storage 21 continuously extending to the lower groove 20b for a predetermined distance in a front direction of the front-rear direction of the vehicle. In other words, the front sunshade storage 22 provided at the sunshade apparatus so as to be spaced away from the rear sunshade storage 21 for a distance corresponding to a distance between a front shoe 27a of the second sunshade panel 16 and a rear slide shoe 28b of the third sunshade panels 17. As each of the pair of the guide rails 18 is configured the same, detailed configuration and function of each portion provided thereof will be described hereinafter with one of the pair of the guide rails 18 as an example.

As illustrated in Fig. 3, slide shoes 26, 27 and 28 are provided at each side of the first, the second and the third sunshade panels 15, 16 and 17 respectively in a vehicle width direction. Specifically, the slide shoes 26, 27 and 28 include a pair of front slide shoes 26a, 27a and 28a respectively. Each of the pair of the front slide shoes 26a, 27a and 28a is provided at a front end portion of each of the slide shoes 26, 27 and 28 in the front-rear direction of the vehicle. Further, the slides shoes 26, 27 and 28 include a pair of rear slide shoes 26b, 27b and 28b respectively. Each of the pair of the rear slide shoes 26b, 27b and 28b is provided at a rear end of each of the slide shoes 26, 27 and 28 in the front-rear direction of the vehicle. Hereinafter, configuration and function of each of slide shoes 26, 27 and 28 is described below with one of each of the slide shoes 26, 27 and 27 provided at one side of the first, the second and the third sunshade panels 15, 16 and 17 respectively. Each of the front slide shoes 26a, 27a and 28a is slidably guided along the upper groove 20a of the guide rail 18. As illustrated in Fig. 4, each of the front slide shoes 26a, 27a and 28a is formed in, for example, a rectangular-shape. Further, each of the front slide shoes 26a, 27a and 28a is formed so as to be accommodated within the front sunshade storage 22 when the sunshade panels are accommodated therewithin in order to open the opening portion 12. The front slide shoe 26a of the first sunshade panel 15 also functions as a driving shoe described below.

The rear slide shoe 27b of the second sunshade panel 16 is slidably guided along the lower groove 20a formed on the guide rail 18. Likewise, the rear slide shoe 28b of the third sunshade panel 17 is slidably guided along the lower groove 20a formed on the guide rail 18. As illustrated in Fig. 4, each of the rear slide shoes 27b and 28b is formed in, for example, a roller-shape. Each of the rear slide shoes 27b and 28b is accommodated within the rear sunshade storage 21 when the first, the second and the third sunshade panels 15, 16 and 17 are accommodated therewithin in order to open the opening portion 12.

The first and the second sunshade panels 15 and 16 are connected by means of a connecting mechanism 30 whose structure will be described below. Likewise, the second and the third sunshade panels 16 and 17 are connected by means of the connecting mechanism 30. As illustrated in Fig. 2, when the first, the second and the third sunshade panels 15, 16 and 17 are deployed over the opening portion 12 to close the opening portion 12, in other words, when the sunshade panels 15, 16 and 17 are in a deployed state, the sunshade panels 15, 16 and 17 are arranged so as to be flush with each other to form an extending surface. On the other hand, when the first, the second and the third sunshade panels 15, 16 and 17 are in an accommodated state to open the opening portion 12, the first, the second and the third sunshade panels 15, 16 and 17 are arranged so as to be superposed with each other. In addition, the first sunshade panel 15 is not illustrated in Fig. 2.

As illustrated in Fig. 1, each of the front slide shoe 26a (the driving shoe) provided at each side of the first sunshade panel 15 is connected to a driving mechanism 33 via a gear cable 32. When a motor provided at the driving mechanism 33 is driven, the gear cable 32 is moved along the guide rail 18 in the front-rear direction of the vehicle in response to a driving direction of the motor. When the gear cable 32 is moved along the guide rail 18, the first sunshade panel 15 is also moved along the guide rail 18 in conjunction with the movement of the driving shoe 26a connected to the gear cable 32. Accordingly, the first sunshade panel 15 is slit in the front-rear direction of the vehicle relative to the roof 11 of the vehicle by a driving force of the driving mechanism 33.

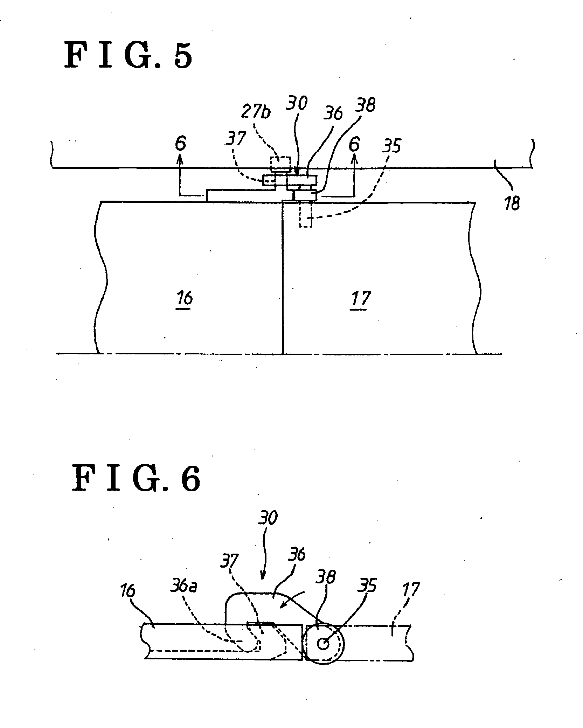

The detailed structure of the connecting mechanisms 30 provided between the first and the second sunshade panels 15 and 16, and between the second and the third sunshade panels 16 and 17 will be described below in accordance with Figs. 5 and 6. The connecting mechanism 30 for connecting the first and the second sunshade panels 15 and 16 is configured the same as the connecting mechanism 30 for connecting the second and the third sunshade panels 16 and 17. Hence, the connecting mechanisms 30 that connects the second and the third sunshade panels 16 and 17 are described below as an example. Further, two identically structured connecting mechanisms 30 are used to connect the second and the third sunshade panels 16 and 17. Hence, the structure of the connecting mechanism 30 provided at one side of the second and the third sunshade panels 16 and 17 is described below as an example.

As illustrated in Fig. 5, a support shaft 35 is provided at the one side of the front end portion of the third sunshade panel 17. A link member 36 is provided at the support shaft 35 so as to be rotatable around an axis of the support shaft 35 perpendicular to the front-rear direction of the vehicle. As illustrated in Fig. 6, a hook portion 36a is formed at the link member 36. The hook portion 36a is engaged/disengaged with/from an engaging member 37 formed at the one side of the rear portion of the second sunshade panel 16. A rubber roller 38 is rotatably journaled at the support shaft 35 so as to correspond to a rear end surface of the second sunshade panel 16. A biasing force is constantly applied to the link member 36 in a counterclockwise direction (i.e., in a direction of an arrow illustrated in Fig. 6) by a torque spring (not shown) winded around the support shaft 35 in order to engage the hook portion 36a with the engaging portion 37.

When the hook portion 36a of the link member 36 is engaged with the engaging member 37, the engaging portion 37 is sandwiched by the hook portion 36a and the rubber roller 38. As a result, a relative movement between the second and the third sunshade panels 16 and 17 is restricted so that the third sunshade panel 17 is moved in conjunction with a movement of the second sunshade panel 16. On the other hand, when the hook 36a of the link member 36 is disengaged from the engaging portion 37, the second sunshade panel 16 becomes movable relative to the third sunshade panel 17.

As illustrated in detail in Fig. 4, the rear sunshade storage 21 includes a storage box 40 having an inclined wall 21a and a horizontal wall 21b. The inclined wall 21 a continuously extends along the lower grooves 20b of the groove portion 20, and further, the inclined wall 21 a inclines upwardly toward a rear side of the vehicle in the front-rear direction of the vehicle. The horizontal wall 21b is connected at an upper end portion of the inclined wall 21a, and further, the horizontal wall 21b extends horizontally towards the rear side of the vehicle in the front-rear direction of the vehicle from the end portion of the inclined wall 21a. A dividing member 42 is rotatably supported within the storage box 40 centering on a hinge pin 41 extending in parallel in the vehicle width direction. The dividing member 42 includes a guide groove 42a (second guide groove), and further, the dividing member 42 has an opening at one end in order to form a substantially U-shape in section. An opening of the dividing member 42 has a width approximately corresponding to a height of the lower groove 20b. Further, a biasing force in a counterclockwise direction (in a direction of an arrow in Fig. 4) is generally applied to the dividing member 42 by a torque spring (not shown) winded around the hinge pin 41. As a result, the dividing member 42 is retained at a position forming an angle illustrated in Fig. 4 so that a dividing wall 42b of the dividing member 42 extends towards the lower grooves 22b in parallel with the inclined wall 21a, and so that the dividing wall 42b retains a height between the inclined wall 21a and the dividing wall 42b to be equal to the height of the lower grooves 20b.

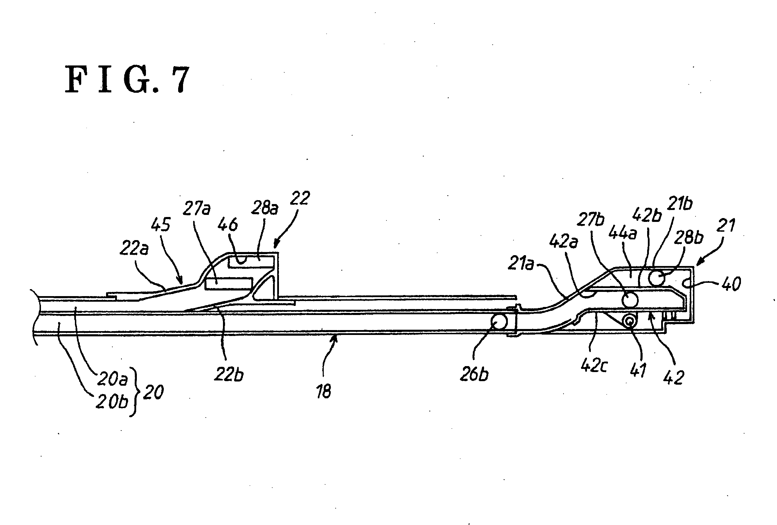

When the dividing member 42 is retained at the position illustrated in Fig. 4, an inclined passage 44 is formed between the inclined wall 21a and the dividing wall 42b. The inclined passage 44 extends into the lower grooves 20b. As a result, the rear slide shoe 28b of the third sunshade panel 17 slid along the lower grooves 20b is slid upwardly along the inclined passage 44. When the rear slide shoe 28b contacts the horizontal wall 21b formed at an upper end of the inclined passage 44 and a component force is applied further rearwardly in the front-rear direction of the vehicle, the dividing member 42 is rotated in a clockwise direction opposite from the direction of the arrow in Fig. 4 so as to resist the biasing force of the torque spring. Then, the dividing member 42 is displaced to a horizontal position illustrated in Fig. 7 so as to extend in the front-rear direction of the vehicle. As a result, a horizontal guide groove 44a (first guide portion / first guide groove) is formed between the horizontal wall 21b of the rear sunshade storage 21 and the dividing member 42.

When the dividing member 42 is in the horizontal position illustrated in Fig. 7, the dividing wall 42b of the dividing member 42 contacts a middle portion of the inclined wall 21a, and a guiding wall 42c is displaced to a position illustrated in Fig. 7 so as to contact lower wall of the lower groove 20b. Hence, two different upper and lower guide portions are formed within the storage box 40 of the rear sunshade storage 21 by the dividing wall 42b of the dividing member 42. In particular, an upper guide portion (a first guide portion) formed with the first guide groove 44a is formed between the horizontal wall 21b of the rear sunshade storage 21 and the dividing wall 42b of the dividing member 42, and a lower guide portion (a second guide portion / a second guide groove) formed with the second guide groove 42a is formed at the dividing member 42. A dividing portion is formed with the upper guide portion formed with the first guide groove 44a, the lower guide portion formed with the second guide portion formed with the second guide groove 42a, and the dividing member 42 form a dividing portion.

On the other hand, as illustrated in Fig. 4, the front sunshade storage 22 includes a storage box 46 having a guide mechanism 45. The guide mechanism 45 includes a first inclined wall 22a and a second inclined wall 22b. The first inclined wall 22a connected to an upper wall of the upper groove 20a of the groove portion 20 so as to extend to the upper wall of the upper groove 20a, and further, the first inclined wall 22a inclines upwardly towards the rear side of the vehicle in the front-rear direction of the vehicle. Similarly, the second inclined wall 22b is connected to a lower wall of the upper groove 20a of the groove portion 20, and further, the second inclined wall 22b inclines upwardly towards the rear side of the vehicle.

Opening/closing operations of the above-mentioned sunshade panels 15, 16 and 17 will be described below. Figs. 2 and 3 illustrate the deployed state of the sunshade panels 15, 16 and 17. When the sunshade panels 15, 16 and 17 are in the deployed state, the front slide shoes 26a, 27a and 28a of respective first, second and third sunshade panels 15, 16 and 17 are engaged with the upper groove 20a of the guide rail 18. The rear slide shoes 26b, 27b and 28b of the respective first, second and third sunshade panels 15, 16 and 17 are engaged with the lower groove 20b of the guide rail 18. Hence, the sunshade panels 15, 16 and 17 are arranged to be flush with each other side by side in the front-rear direction of the vehicle.

When the motor of the driving mechanism 33 is driven by operating a switch (not shown) for moving the sunshade panels 15, 16 and 17 to open the opening portion 12 while the sunshade panels 15, 16 and 17 are in the deployed state, a driving force generated at the motor is transmitted to the first sunshade panel 12 via the front slide shoe 26a (driving shoe 26a). Then, the first sunshade panel 15 is slid rearwardly in the front-rear direction of the vehicle along the groove portion 20 formed on the guide rail 18. The switch for moving the sunshade panels 15, 16 and 17 is provided at an instrument panel or in the vicinity of the instrument panel. When the first sunshade panel 15 is slid rearwardly, the second and the third sunshade panels 16 and 17 receive the driving force via the connecting mechanism 30 from the first sunshade panel 15, and then the second and the third sunshade panels 16 and 17 are also slid in the same direction along the groove portion 20 formed on the guide rail 18.

When the third sunshade panel 17 reaches at a predetermined slide position, the rear and front slide shoes 28b and 28a of the third sunshade panel 17 are moved into the rear sunshade storage 21 continuously extending from the lower groove portion 20b and into the front sunshade storage 22 continuously extending from the upper grooves 20a respectively. Then, the third sunshade panel 15 is lifted upwardly along the inclined walls 22b and 42b of respective front and rear sunshade storages 22 and 21.

Specifically, within the rear sunshade storage 21, the rear slide shoe 28b of the third sunshade panel 17 is guided along the inclined passage 44 formed by the inclined wall 21a of the rear sunshade storages 21 and the dividing walls 42b of the dividing members 42, and then the third sunshade panel 17 is slid up along the inclined passage 44. When the rear slide shoe 28b contacts the horizontal wall 21b connected at the upper end of the inclined wall 21 a, the dividing member 42 is rotated in the clockwise direction in Fig. 4 so as to resist the biasing force of the torque spring (not shown) because of the component force applied rearwardly in the front-rear direction of the vehicle. As a result, the dividing member 42 is displaced to the horizontal position illustrated in Fig. 7. Then, the rear slide shoe 28b is moved rearwardly along the horizontal first guide groove 44a formed by the dividing wall 42b (upper wall) of the dividing member 42 and the horizontal wall 21b.

On the other hand, within the front sunshade storage 22, the front slide shoe 28a of the third sunshade panel 17 is slid up by the guide mechanism 45 formed with the first and the second inclined walls 22a and 22b to be moved into the storage box 46.

As mentioned above, the third sunshade panel 17 is slid up relative to the first and the second sunshade panel 15 and 16 while the third sunshade panel 17 remains to be in a substantially horizontal posture at the predetermined slide position when the third sunshade panel 17 is moved rearwardly. When the third sunshade panel 17 is slid up, the link member 36 is rotated around the support shaft 35 so that the rubber roller 38 is moved upon an upper surface of the second sunshade panel 16. As a result, the second sunshade panel 16 becomes movable in the rearward direction relative to the third sunshade panel 17.

When the first sunshade panel 15 is further slid in the rearward direction, the rear slide shoe 27b of the second sunshade panel 16 is slid up along the inclined wall 21 a of the rear sunshade storage 21. Then, the rear slide shoe 27b is moved into the second guide groove 42a formed at the dividing member 42 that is retained at the horizontal posture (see Fig. 7). Likewise, the front slide shoe 27a of the second sunshade panel 16 is slid up along the guide mechanism 45 of the front sunshade storage 22.

As a result, the rear slide shoe 27b of the second sunshade panel 16 is accommodated at the second guide groove 42a, and the rear slide shoe 28b of the third sunshade panel 17 is accommodated at the first guide groove 44a so that the third sunshade panel 17 is superposed upon the second sunshade panel 16. The dividing wall 42b of the dividing member 42 divides the first guide groove 44a from the second guide groove 42a so that the first guide groove 44a is formed so as to extend upon the first guide groove 44a. The rear slide shoe 28b of the third sunshade panel 17 is positioned between the horizontal wall 21b of the storage box 40 and the dividing wall 42b of the dividing member 42 so that upward and downward movement of the rear slide shoe 28b is restricted. Further, the rear slide shoe 27b of the second sunshade panel 16 is positioned within the second guide groove 42a formed at the dividing member 42 so that upward and downward movement of the rear slide shoe 27b is restricted. In addition, when the rear slide shoe 26b reaches a position illustrated with a full line in Fig. 7, the sunshade apparatus 10 is in a fully-opened state.

According to the above-mentioned first embodiment, the second guide grooves 42a and the first guide grooves 44a are individually provided for guiding the pair of rear slide shoes 27b and the pair of rear slide shoes 28b of the second and the third sunshade panels 16 and 17 respectively when the sunshade panels 15, 16 and 17 are moved rearward to open the opening portion 12. Hence, backlash of the sunshade panels 15, 16 and 17 within the front and rear sunshade storages 22 and 21 is prevented without providing a spring and the like therewithin. Therefore, no force is applied to the first, the second and the third sunshade panels 15, 16 and 17. In other words, because a biasing means such as the spring for preventing the backlash of the superposed sunshade panels 15, 16 and 17 within the sunshade storages 21 and 22 does not need to be provided at the sunshade apparatus 10, slide resistivity of the first, the second and the third sunshade panels 15, 16 and 17 is not increased. The slide resistivity is generated by the biasing means generating the frictional resistance between the first, the second and the third sunshade panels 15, 16 and 17.

Furthermore, according to the above-mentioned first embodiment, the upper groove 20a and the lower groove 20b are formed on each of the guide rails 18. Each of the lower grooves 20b is formed so as to extend along under each of the upper grooves 20a. Either one of the front slide shoes 26a, 27a and 28a or the rear slide shoes 26b, 27b and 28b of the sunshade panels 15, 16 and 17 are slidably guided along the upper grooves 20a, and the other one of the front slide shoes 26a, 27a and 28a or the rear slide shoes 26b, 27b and 28b of the sunshade panels 15, 16 and 17 are slidably guided along the lower grooves 20b. Hence, because the front slide shoes 26a, 27a and 28a and the rear slide shoes 26b, 27b and 28b are individually guided along the guide rails 18, the first, the second and the third sunshade panels 15, 16 and 17 are smoothly moved. Moreover, the first guide groove 44a and the second guide groove 42a of the rear sunshade storage 21 is formed so as to accommodate the plurality of the sunshade panels 15, 16 and 17 in the superposed state. Therefore, the sunshade apparatus 10 of the first embodiment is applicable to any types of vehicle.

According to the above-mentioned first embodiment, each of the dividing members 42 formed in the U-shape in section and having the second guide groove 42a is rotatably provided at each of the rear sunshade storages 21. Therefore, the second and the third sunshade panels 16 and 17 are individually stored within the first guide grooves 44a formed between the horizontal walls 21b and the dividing members 42 and the second guide grooves 42a formed at the dividing members 42 by rotational movement of the dividing member 42.

### [Second Embodiment]

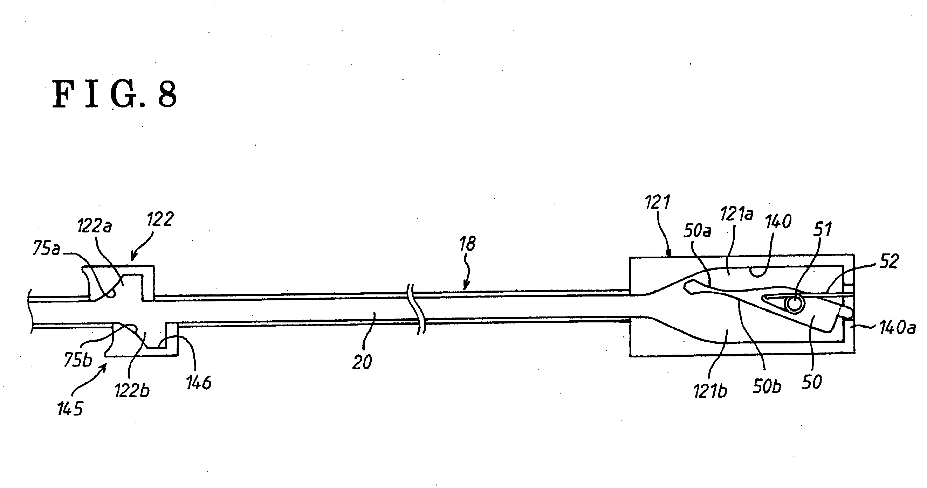

A second embodiment of the present invention will be described in accordance with Figs. 8, 9, 10 and 11 of the attached drawings. In the first embodiment, the second and the third sunshade panels 16 and 17 are slid upward when the sunshade panels 15, 16 and 17 are accommodated within the front and the rear sunshade storages 22 and 21. However, in the second embodiment, the plurality of the sunshade panels are separately positioned at an upper accommodating position and a lower accommodating position. In the second embodiment, only the differences between the first and the second embodiment will be explained. In the second embodiment, the same reference numerals are provided to the same portions of the first embodiment, and the explanation will not be repeated.

As is the case with the first embodiment, a pair of guide rails 18 is provided at the vehicle ceiling roof portion of the roof 11 facing the vehicle compartment so as to extend in the front-rear direction of the vehicle, as illustrated in Fig. 8. The groove portion 20 in substantially bracket-shape in section is formed on a surface of each of the guide rails 18 facing the opening portion 12 so that each of the groove portions 20 faces each other. Hereinafter, function and detailed structure of the pair of the guide rails 18 and portions and mechanisms provided thereat will be described with one of the pair of the guide rails 18 for an explanatory purpose, because the both guide rails 18 are structured the same.

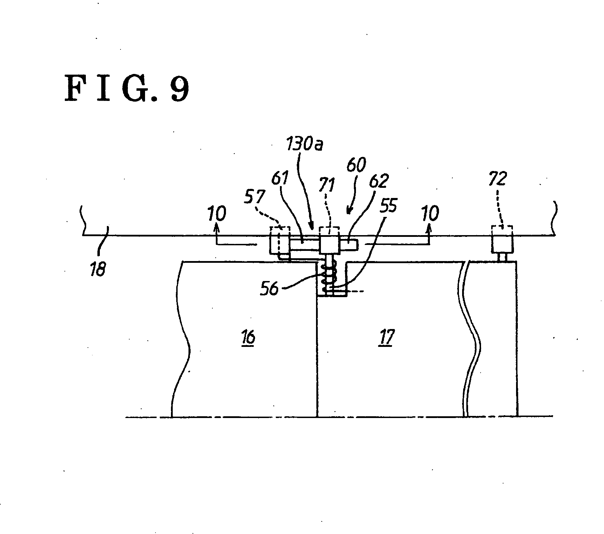

As illustrated in Fig. 9, a front slide shoe 71 is supported at each side of the front end of each of the first, the second and the third sunshade panels 15, 16 and 17. The front slide shoe 71 is slidably engaged with the groove portion 20. A rear slide shoes 72 is supported at each side of the rear end of each of the first, the second and the third sunshade panels 15, 16 and 17. The rear slide shoe 72 is slidably engaged with the groove portion 20 respectively. Hereinafter, functions and movement of the pair of the rear slide shoes 71 and the pair of the front slide shoes 72 will be described with the rear and the front slide shoes 71 and 72 provided at one of the each side of the first, the second and the third sunshade panel 15, 16 and 17 as an example.

A rear sunshade storage 121 having a storage box 140 is fixed at an end portion of the groove portion 20. The storage box 140 continuously extends to the groove portion 20. An upper guide groove 121 a (first guide portion / first guide groove) and a lower guide groove 121b (second guide portion / second guide groove) for accommodating the rear slide shoes 72 supported at the rear portions of the second and the third sunshade panels 16 and 17 are formed within the rear sunshade storage 121. The upper guide grove 121a is formed at an upper position relative to the groove portion 20, and the lower guide groove 121b is formed at a lower position relative to the groove portion 20. Further, a front sunshade storage 122 having a storage box 146 for accommodating the front slide shoes 71 supported at the front portions of the second and the third sunshade panels 16 and 17 is fixed on the guide rail 18 so that the sunshade box 145 is formed so as to continuously extend to the groove portion 20.

A dividing member 50 is rotatably supported within the rear sunshade storage 121 by means of a hinge pin 51. The hinge pin 51 is provided within the rear sunshade storage 121 on a central axis of the groove portion 20. The dividing member 50 is biased in a clockwise direction in Fig. 8 by a spring force of a torque spring 52 winded around the hinge pin 51. As a result, a rear end portion of the dividing member 50 is generally positioned at a rotational end at which the dividing member 50 contacts a stopper 140a formed at the storage box 140, as illustrated in Fig. 8. When the rear end portion of the dividing member 50 contacts the stopper 140a, a spatial extension from the groove portion 20 to the upper guide groove 121a is blocked by the dividing member 50. Instead, the groove portion 20 is spatially extended to the lower guide groove 121b of the rear sunshade storage 121 by an inclined guide surface 50b (a second guide portion) formed at a lower surface of the dividing member 50.

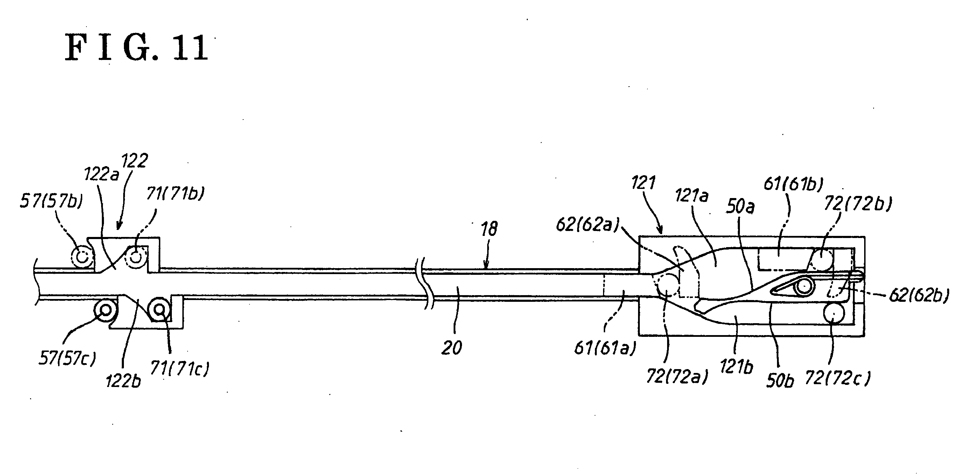

Further, as illustrated in Fig. 11, the dividing member 50 is so structured that the rear end portion of the dividing member 50 is pressed by the rear slide shoe 72 (72c) of the third sunshade panel 17 when the rear slide shoe 72 (72c) of the third sunshade panel 17 is moved rearward into the lower guide groove 121b. When the rear end portion of the dividing member 50 is pressed by the rear slide shoe 72 (72c) of the third sunshade panel 17, the dividing member 50 is rotated to a position forming an angle illustrated in Fig. 11 by the spring force of the torque spring 52. When the dividing member 50 is moved to the position illustrated in Fig. 11, a spatial extension from the groove portion 20 to the lower guide groove 121b is blocked by the dividing member 50. Instead, the groove portion 20 is spatially connected to the upper guide groove 121a formed within the rear sunshade storage 121 by an inclined guide surface 50a that is formed at an upper surface of the dividing member 50.

On the other hand, the front sunshade storage 122 includes a guide mechanism 145 having an upper guide groove 122a and a lower guide groove 122b, both of which continuously extend from/to the groove portion 20. The upper guide groove 122a includes an upwardly inclined surface 75a. The lower guide groove 122b includes a downwardly inclined surface 75b. Depth of each of the upper and the lower guide grooves 122a and 122b of the guide mechanism 145 is set to have a sufficient space to disengage the front slide shoes 71 (71b, 71c) of the second and the third sunshade panels 16 and 17 and to completely accommodate the front slide shoes 71 (71b, 71c) of the second and the third sunshade panels 16 and 17 respectively within the upper and the lower guide grooves 122a and 122b.

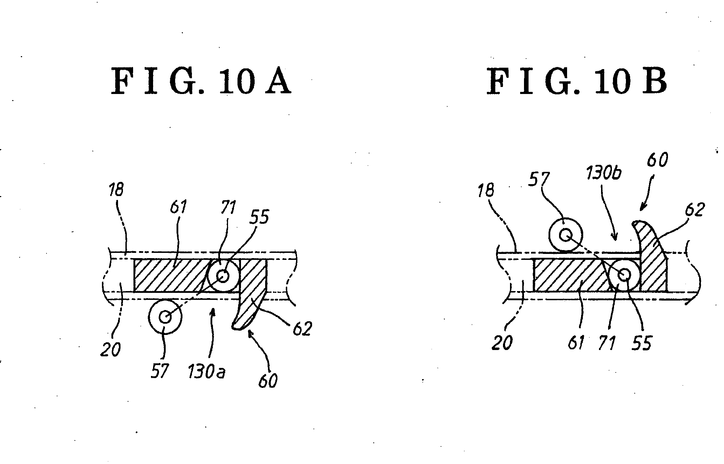

A connecting mechanism 130a for connecting the second and the third sunshade panels 16 and 17 will be described below in accordance with Figs. 9 and 10. The connecting mechanism 130a is provided at each side of the sunshade panels 16 and 17 in the vehicle width direction. Therefore, the connecting mechanism 130a provided at one side of the sunshade panels 16 and 17 will be described below as an example. A support shaft 55 is provided at the front end portion of the third sunshade panel 17 facing the rear end portion of the second sunshade panel 16. The front slide shoe 71 is supported at the support shaft 55. A torque spring 56 is winded around the support shaft 55, and one end of the torque spring 56 extends in a forward direction of the front-rear direction of the vehicle. A roller 57 is supported at a front end portion of the forwardly extended end of the torque spring 56 so as to be rotatable centering on an axis which is parallel to the front slide shoe 71. The roller 57 is rotated along a lower surface of the guide rail 18, as illustrated in Fig. 10A. The other end of the torque spring 56 is engaged with the third sunshade panel 17.

The roller 57 is always biased towards the lower surface of the guide rail 18, at which the guide rail 18 contacts the roller 57, by a spring force of the torque spring 56. Hence, the support shaft 55 provided at the front end portion of the third sunshade panel 17 is pressed toward the lower surface of the groove portion 20 because the support shaft 55 is always biased in a downward direction by a reaction force of the torque spring 56 with the roller contacting the lower surface of the guide rail 18 as a fulcrum.

A driving mechanism 60 is provided at a rear end portion of the second sunshade panel 16 facing the front end of the third sunshade panel 17. The diving mechanism 60 includes a pressing portion 61 and a hook portion 62. The pressing portion 61 is spaced away for a predetermined distance from the second sunshade panel 16 in a sliding direction thereof. The front slide shoe 71 provided at the front end portion of the third sunshade panel 17 is sandwiched between the pressing portion 61 and the hook portion 62 so that the third sunshade panel 17 is slid in conjunction with the movement of the second sunshade panel 16. The pressing portion 61 includes an inclined surface so that the front slide shoe 71 provided at the front end portion of the third sunshade panel 17 is easily disengaged in the downward direction. Further, the hook portion 62 is formed to downwardly protrude so that the hook portion 62 easily scoops up the downwardly moved front slide shoe 71 of the third sunshade panel 17.

The connecting mechanism 130a includes the front slide shoe 71, the torque spring 56, the roller 57, the driving mechanism 60 (the pressing portion 61, the hook portion 62) and the like.

A connecting mechanism 130b for connecting the first and the second sunshade panels 15 and 16 is structured substantially the same as the above-mentioned connecting mechanism 130a. However, as illustrated in Fig. 10B, the connecting mechanism 130b differed from the connecting mechanism 130a in that: 1) the roller 57 is moved along an upper surface of the guide rail 18 by the spring force of the torque spring 56; 2) the support shaft 55 provided at a front end portion of the second sunshade panel 17 is always pressed at an upper surface of the groove portion 20 by being always biased upwardly by the spring reaction force of the torque spring with the roller 57 contacting the upper surface of the guide rail 18 as the fulcrum; and 3) the pressing portion 61 of the driving mechanism 60 is inclined in the opposite direction from the pressing portion 61 of the connecting mechanism 130a, and the hook portion 62 is protruded in the opposite direction (i.e., in the upward direction).

According to the above-mentioned second embodiment, when the first sunshade panel 15 is slid in the rearward direction of the front-rear direction of the vehicle along the groove portion 20 of the guide rail 18 by the driving force of the motor while the sunshade panels 15, 16 and 17 are in the deployed state, the second and the third sunshade panels 16 and 17 are also slid in the same direction along the groove portion 20 via the connecting mechanisms 130a and 130b.

While the first, the second and the third sunshade panels are in the deployed state, the dividing member 50 is rotated to the position in which the lower guide groove 121b of the rear sunshade storage 121 is spatially connected to the groove portion 20, as illustrated in Fig. 8. Hence, when the third sunshade panel 17 reaches a predetermined slide position, the rear slide shoe 72 of the third sunshade panel 17 is downwardly slid along the downwardly inclined guide surface 50b formed at the lower surface of the dividing member 50. Then, the rear slide shoe 72 of the third sunshade panel 17 is accommodated within the lower guide grieve 121b, as illustrated in Fig. 11.

In order to relate the front and the rear slide shoes 71, 72 and each of the sunshade panels, 15, 16 and 17, alphabetical characters 'a', 'b' and 'c' are used. Specifically, the slide shoes of the first sunshade panel 15 are described as the front slide shoe 71a and the rear slide shoe 71b, the slide shoes of the second sunshade panel 16 is described as the front slide shoe 71b and the rear slide shoe 72b, and the slide shoes of the third sunshade panel 17 is described as the front slide shoe 71c and the rear slide shoe 72c.

As mentioned above, when the front slide shoe 71 (71c) of the third sunshade panel 17 is moved rearward to a position corresponding to the lower guide groove 122b of the front sunshade storage 122, the front slide shoe 71 (71c) of the third sunshade panel 17 is downwardly slid along the downwardly inclined guide surface 75b formed at the lower guide groove 122b by the spring reaction force of the torque spring 56. As a result, the front slide shoe 71 (71c) of the third sunshade panel 17 is accommodated within the lower guide groove 122b of the front sunshade storage 122.

As mentioned above, the third sunshade panel 17 is downwardly slid along the inclined guide surface 50b of the dividing member 50 and the downwardly inclined guide surface 75b of the lower guide groove 122b formed within the front sunshade storage 122. Then, the third sunshade panel 17 is disengaged from the groove portion 20, and the front and the rear slide shoes 71 (71c) and 72 (72c) are accommodated within the front and the rear sunshade storage 122 and 121 respectively while retaining a horizontal posture of the third sunshade panel 17. When the third sunshade panel 17 is downwardly slid, the second sunshade panel 17 becomes further movable in the rearward direction.

When the rear slide shoe 72 (72c) of the third sunshade panel 17 is slid into the lower guide groove 121b of the rear sunshade storage 121, the rear end portion of the dividing member 50 is pressed by the rear slide shoe 72 (72c). Then, the dividing member 50 is rotated in a counterclockwise direction in Fig. 11 centering on the hinge pin 51 so as to resist the spring force of the torque spring 52. As a result, the dividing member 50 blocks the spatial connection between the groove portion 20 and the lower guide groove 121b of the rear sunshade storage 121 so that the groove portion 20 is spatially connected to the upper guide groove 121 a.

When the first sunshade panel 15 is slid further rearwardly by the driving force of the motor, and when the second sunshade panel 15 reaches the predetermined slide position, the rear slide shoe 72 (72c) of the second sunshade panel 16 is guided by the inclined guide surface 50a formed at the upper surface of the dividing member 50 so that the rear slide shoe 72 (72c) of the second sunshade panel 16 is slid upwardly. Then, the rear slide shoe 72 (72c) of the second sunshade panel 16 is accommodated within the upper guide groove 121a. On the other hand, when the front slide shoe 71 (71b) of the second sunshade panel 16 is slid rearwardly to a position corresponding to the upper guide groove 122a of the front sunshade storage 122, the front slide shoe 71 (71b) supported at the second sunshade panel 16 is slid upwardly along the upwardly inclined guide surface 75a formed at the upper guide groove 122a by the spring reaction force of the torque spring 65. As a result, the front slide shoe 71 (71b) of the second sunshade panel 16 is accommodated within the upper guide groove 122a.

The front and the rear slide shoes 71 and 72 of the second and the third sunshade panels 16 and 17 are accommodated within the front and the rear sunshade storages 122 and 121 respectively so as that the second sunshade panel 16 is positioned higher relative to the groove portion 20 and the third sunshade panel 17 is positioned lower relative to the groove portion 20. Then, the first sunshade panel 15 is moved rearwardly to an end position for rearward movement within the groove portion 20 so that the first sunshade panel 15 is positioned between the second and the third sunshade panels 16 and 17 so as to be sandwiched by the second and the third sunshade panels 16 and 17. As a result, the sunshade panels 15, 16 and 17 are in the closed state to open the opening portion 12.

In a case to deploy the sunshade panels 15, 16 and 17 to close the opening portion 12, firstly, the first sunshade panel 15 is slid in the forward direction along the groove portion 20 of the guide rail 18. When the first sunshade panel 15 is forwardly slid along the groove portion 20, the hook portion 62 (62a) provided upwardly at the rear end portion of the first sunshade panel 15 is engaged with the front slide shoe 71 (71b) of the second sunshade panel 16 accommodated within the upper guide groove 122a of the front sunshade storage 122 so that the front slide shoe 71 (72b) of the second sunshade panel 16 is slid along the upwardly inclined guide surface 75a formed at the upper guide grove 122a. Then, the front slide shoe 71 (71b) of the second sunshade panel 16 is engaged with the groove portion 20. Then, the second sunshade panel 16 forms a flush surface with the first sunshade 15 and the second sunshade panel 16 is integrally slide in the forward direction of the front-rear direction of the vehicle with the first sunshade panel 15 along the groove portion 20.

When the second sunshade panel 16 is forwardly slid for a predetermined distance, the hook portion 62 (62b) downwardly provided at the rear end portion of the second sunshade panel 16 is engaged with the front slide shoe 71 (71c) of the third sunshade panel 17 accommodated within the lower guide groove 122b. Then, the front slide shoe 71 (71c) of the third sunshade panel 17 is pulled along the downwardly inclined guide surface 75b formed at the lower guide groove 122b. As a result, the front slide shoe 71 (71c) of the third sunshade panel 17 is engaged with the groove portion 20. Eventually, the first, the second and the third sunshade panels 15, 16 and 17 are in the deployed state in which the first, the second and the third sunshade panels 15, 16 and 17 deployed over the opening portion 12 to close the opening portion 12.

According to the above-mentioned second embodiment, each of the guide grooves 20 are formed at each of the guide rails 18 so that the front and the rear slide shoes 71 and 72 of the first, the second and the third sunshade panels 15, 16 and 17 are slid therealong. Therefore, the second and the third sunshade panels 16 and 17 are slid along the guide grooves 20 so as to be positioned higher and lower respectively relative to the guide grooves 20 when the sunshade panels 15, 16 and 17 are accommodated within the front and the rear sunshade storages 122 and 121. Furthermore, the dividing members 50 are formed so as to guide the second and the third sunshade panels 16 and 17 to be higher and lower respectively relative to the guide grooves 20 by means of the first inclined guide surfaces 50a and the second inclined guide surfaces 50b. Therefore, the second and the third sunshade panels 16 and 17 are positioned higher and lower respectively relative to the guide grooves 20 when the front and the rear slide shoes 71 and 72 of the second and the third sunshade panels 16 and 17 are accommodated within the front and the rear sunshade storages 122 and 121 respectively. As a result, a moving distance of each of the second and the third sunshade panels 16 and 17 in a height direction when the sunshade panels 15, 16 and 17 are in the opened state is set to be equal. Hence, the sunshade apparatus 10 of the second embodiment is less dependent on conditions of the vehicle to which the present invention is applied. In other words, the sunshade apparatus of the second embodiment is applicable to any types of vehicles.

According to the above-mentioned second embodiment, the dividing members 50 are supported at the rear sunshade storages 121 so as to be rotatable centering on the horizontal axis of the guide grooves 20. Further, the first inclined guide surfaces 50a are formed on the upper surfaces of the dividing members 50, and the second inclined guide surfaces 50b are formed on the lower surfaces of the dividing members 50. Hence, the dividing members 50 easily guide the second and the third sunshade panels 16 and 17 upwardly and downwardly respectively by the rotation of the dividing members 50.

In the first embodiment, the slide shoes 26, 27 and 28 of the sunshade panels 15, 16 and 17 are accommodated within the front and the rear sunshade storages 22 and 21 by sliding the slide shoes 26, 27 and 28 upwardly from the guide grooves 20. However, a plurality of sunshade panels may be accommodated at a sunshade storage by guiding the plurality of sunshade panels downwardly from a guide groove.

Further, in the second embodiment, the third sunshade panel 17, which is firstly moved to the closed position, is placed at the lower position relative to the guide grooves 20 when the front and the rear slide shoes 71 and 72 of the third sunshade panel 17 are accommodated within the front and the rear sunshade storage 122 and 121 respectively. Then, the second sunshade panel 16, which is secondly moved to the closed position, is placed at the upper position relative to the guide grooves 20 when the front and the rear slide shoes 71 and 72 of the second sunshade panel 16 are accommodated within the front and the rear sunshade storages 122 and 121 respectively. However, a sunshade panel, which is rearwardly slid firstly, may be positioned at an upper position relative to a guide groove, and a sunshade panel, which is rearwardly slid secondly, may be positioned at a lower position relative to the guide groove when a plurality of sunshade panels are accommodated within a sunshade storage.

According to the above-mentioned embodiments, the panel 13 made of the transparent glass panel is fixed at the opening portion 12 formed at the roof portion 11. The first, the second and the third sunshade panels 15, 16 and 17 are movably arranged below the panel 13. However, the present invention is applicable to a sunshade apparatus having movable glass panels by which the opening portion 12 formed at the roof portion 11 is opened/closed.

## Claims

1. A sunshade apparatus for a vehicle (10), comprising:
a guide rail (18) adapted to be mounted along a side edge of a light inletting portion formed at a vehicle roof (11) and extending in a front-rear direction of the vehicle roof (11);
a plurality of sunshade panels (15, 16, 17) slidably supported at the guide rail so as to open/close the light inletting portion, and the plurality of sunshade panels (15, 16, 17) arranged in a front-rear direction of the vehicle roof (11) when the light inletting portion is closed;
a dividing portion (42, 50) rotatably supported at a rear end portion of the guide rail (18), the dividing portion (42, 50) including a first guide portion (44a, 121a) for guiding an rear end portion of one (17) of the plurality of sunshade panels (15, 16, 17) arranged at a rearmost position of the light inletting portion in the front-rear direction thereof, and a second guide portion (42a, 121b) for guiding a rear end portion of the other one (16) of the plurality of the sunshade panels (15, 16, 17) positioned anterior to the one (17) of the plurality of sunshade panels (15, 16, 17); and
a guide mechanism (45, 145) provided at the guide rail (18) for guiding a front end portion of each of the plurality of sunshade panels (15, 16, 17) in an upward direction and in a downward direction of the vehicle roof (11).

2. The sunshade apparatus for the vehicle (10) according to claim 1 further comprising a storage box (40, 140) supported at the rear end portion of the guide rail (18), wherein the first guide portion (44a, 121a) includes a first guide groove (44a, 121a) formed within the storage box, and the second guide portion (42a, 121b) includes a second guide groove (42a, 121b) formed within the storage box so as to be positioned below the first guide groove (44a, 121a) in the upward-downward direction of the vehicle roof (11).

3. The sunshade apparatus for the vehicle (10) according to claim 2, wherein the dividing portion includes a dividing member (42) rotatably supported around a horizontal axis extending in a width direction of the vehicle roof (11) and is provided with the second guide groove (42a), the dividing member (42) forming the first guide groove (44a) with a wall portion of the storage box (40).

4. The sunshade apparatus for the vehicle (10) according to Claim 3, wherein the guide rail (18) includes a first groove (20a) and a second groove (20b), which are arranged in parallel to each other in the upward-downward direction of the vehicle roof (11), the first groove (20a) slidably guides the front end portion of each of the plurality of the sunshade panels (15, 16, 17) and is connected to the guide mechanism (45), and the second groove (20b) slidably guides the rear end portion of each of the plurality of the sunshade panels (15, 16, 17) and is selectively connected to the first guide groove (44a) or to the second guide groove (42a) by a rotation of the dividing member (42).

5. The sunshade apparatus for the vehicle (10) according to Claim 4, wherein the dividing portion includes a spring rotatably biasing the dividing member (42), and the first guide groove (42a) functions as an inclined passage (44) connected to the second groove (20b).

6. The sunshade apparatus for the vehicle (10) according to Claim 2, the dividing portion includes a dividing member rotatably supported around a horizontal axis extending in the width direction of the vehicle roof (11), the dividing portion includes a dividing member (50) for forming the first guide groove (121 a) and the second guide groove (121b) between a wall portion of the storage box (140) and an upper and a lower surfaces (50a, 50b) of the dividing member (50).

7. The sunshade apparatus for the vehicle (10) according to Claim 6, wherein the guide rail (18) includes a groove portion (20) slidably guiding the front and the rear end portions of each of the plurality of the sunshade panels (15, 16, 17), the groove portion (20) is selectively connected to the first guide groove (121a) or to the second guide groove (121b) by the rotation of the dividing member (50), and the groove portion (20) is connected to the guide mechanism (145).

8. The sunshade apparatus for the vehicle (10) according to Claim 7, wherein the dividing portion includes a spring (52) rotatably biasing the dividing member (50) so as to connect the groove portion (20) and the second guide groove (121b).

## Patentansprüche

1. Sonnenblendenvorrichtung für ein Fahrzeug (10), welche aufweist:
eine Führungsschiene (18) zur Montage entlang einer Seitenkante eines in einem Fahrzeugdach (11) ausgebildeten Lichteinlassabschnitts, welche sich in einer Längsrichtung des Fahrzeugdachs (11) erstreckt;
eine Vielzahl von Sonnenblendenpaneelen (15, 16, 17), welche gleitend an der Führungsschiene gelagert sind, um den Lichteinlassabschnitt zu öffnen bzw. zu schließen, und welche in einer Längsrichtung des Fahrzeugdachs (11) angeordnet sind, wenn der Lichteinlassabschnitt geschlossen ist;
ein Teilungsabschnitt (42, 50), welcher an einem hinteren Endabschnitt der Führungsschiene (18) drehbar gelagert ist und einen ersten Führungsabschnitt (44a, 121a) zum Führen eines hinteren Endabschnitts eines (17) der Vielzahl von Sonnenblendenpaneelen (15, 16, 17), welcher an einer hintersten Stelle des Lichteinlassabschnitts in dessen Längsrichtung angeordnet ist, und einen zweiten Führungsabschnitt (42a, 121b) zum Führen eines hinteren Endabschnitt eines anderen (16) der Vielzahl von Sonnenblendenpaneelen (15, 16, 17), welches vor dem einen (17) der Vielzahl von Sonnenblendenpaneelen (15, 16, 17) angeordnet ist, umfasst; und
ein Führungsmechanismus (45, 145), welcher an der Führungsschiene (18) zum Führen eines vorderen Abschnitts von jedem der Vielzahl von Sonnenblendenpanelen (15, 16, 17) in eine Aufwärts- und Abwärtsrichtung des Fahrzeugdachs (11) vorgesehen ist.

2. Sonnenblendenvorrichtung für ein Fahrzeug (10) gemäß Anspruch 1, welches ferner eine Aufbewahrungsbox (40, 140) aufweist, welche an dem hinteren Endabschnitt der Führungsschiene (18) abgestützt ist, wobei der erste Führungsabschnitt (44a, 121a) eine in der Aufbewahrungsbox ausgebildeten erste Führungsrille (44a, 121 a) umfasst und der zweite Führungsabschnitt (42a, 121 b) eine zweite Führungsrille (42a, 121 b) umfasst, welche in der Aufbewahrungsbox so ausgebildet ist, dass sie sich in Auf- und Abwärtsrichtung des Fahrzeugdachs (11) unterhalb der ersten Führungsrille (44a, 121a) befindet.

3. Sonnenblendenvorrichtung für ein Fahrzeug (10) gemäß Anspruch 2, wobei der Teilungsabschnitt ein Teilungsteil (42) umfasst, welches um eine sich in Breitenrichtung des Fahrzeugdachs (11) erstreckende horizontale Achse drehbar gelagert ist, und mit der zweiten Führungsrille (42a) versehen ist, wobei das Teilungsteil (42) mit einem Wandabschnitt der Aufbewahrungsbox (40) die erste Führungsrille (44a) bildet.

4. Sonnenblendenvorrichtung für ein Fahrzeug (10) gemäß Anspruch 3, wobei die Führungsschiene (18) eine erste Rille (20a) und eine zweite Rille (20b) umfasst, welche in Auf- und Abwärtsrichtung des Fahrzeugdachs (11) parallel zueinander angeordnet sind, wobei die erste Rille (20a) den vorderen Endabschnitt von jedem der Vielzahl von Sonnenblendenpaneelen (15, 16, 17) gleitend führt und mit dem Führungsmechanismus (45) verbunden ist, und die zweite Rille (20b) den hinteren Endabschnitt von jeder Vielzahl der Sonnenblendenpaneelen (15, 16, 17) gleitend führt und durch Drehung des Teilungsteils (42) wahlweise mit der ersten Führungsrille (44a) oder der zweiten Führungsrille (42a) verbunden ist.

5. Sonnenblendenvorrichtung für ein Fahrzeug (10) gemäß Anspruch 4, wobei der Teilungsabschnitt eine Feder umfasst, welche das Teilungsteil (42) drehend vorspannt, und die erste Führungsrille (42a) als ein mit der zweiten Rille (20b) verbundener angestellter Abschnitt (44) fungiert.

6. Sonnenblendenvorrichtung für ein Fahrzeug (10) gemäß Anspruch 2, wobei der Teilungsabschnitt ein Teilungsteil, welches um eine sich in Breitenrichtung des Fahrzeugdachs (11) erstreckenden horizontalen Achse drehbar gelagert ist, umfasst, wobei der Teilungsabschnitt ein Teilungsteil (50) zum Bilden der ersten Führungsrille (121a) und der zweiten Führungsrille (121b) zwischen einem Wandabschnitt der Aufbewahrungsbox (41) und oberen und unteren Oberflächen (50a, 50b) des Teilungsteils (50) umfasst.

7. Sonnenblendenvorrichtung für ein Fahrzeug (10) gemäß Anspruch 6, wobei die Führungsschiene (18) einen Rillenabschnitt (20) umfasst, welcher die vorderen und hinteren Endabschnitte von jedem der Vielzahl von Sonnenblendenpaneelen (15, 16, 17) gleitend führt, wobei der Rillenabschnitt (20) durch Drehung des Teilungsteils (50) wahlweise mit der ersten Führungsrille (121a) oder der zweiten Führungsrille (121b) verbunden ist, und der Rillenabschnitt (20) mit dem Führungsmechanismus (145) verbunden ist.

8. Sonnenblendenvorrichtung für ein Fahrzeug (10) gemäß Anspruch 7, wobei der Teilungsabschnitt eine Feder (52) umfasst, welche das Teilungsteil (50) drehend vorspannt, um den Rillenabschnitt (20) und die zweite Führungsrille (121b) zu verbinden.

## Revendications

1. Appareil pare-soleil pour un véhicule (10), comprenant:
un rail de guidage (18) adapté pour être monté le long d'un bord latéral d'une partie d'entrée de lumière formée au niveau du toit (11) d'un véhicule et s'étendant dans une direction avant-arrière du toit (11) du véhicule;
une pluralité de panneaux (15, 16, 17) pare-soleil supportés en coulissement au niveau du rail de guidage de sorte à ouvrir/fermer la partie d'entrée de lumière, et la pluralité de panneaux (15, 16, 17) pare-soleil agencés dans une direction avant-arrière du toit (11) du véhicule lorsque la partie d'entrée de lumière est fermée;
une partie de division (42, 50) supportée en rotation au niveau d'une partie d'extrémité arrière du rail de guidage (18), la partie de division (42, 50) incluant une première partie de guidage (44a, 121a) pour guider une partie d'extrémité arrière d'un panneau (17) parmi la pluralité de panneaux (15, 16, 17) pare-soleil agencé au niveau d'une position le plus vers l'arrière de la partie d'entrée de lumière dans la direction avant-arrière de celle-ci, et une deuxième partie de guidage (42a, 121b) pour guider une partie d'extrémité arrière de l'autre panneau (16) parmi la pluralité des panneaux (15, 16, 17) pare-soleil positionné devant le panneau (17) parmi la pluralité de panneaux (15, 16, 17) pare-soleil; et
un mécanisme de guidage (45, 145) prévu au niveau du rail de guidage (18) pour guider une partie d'extrémité avant de chacun de la pluralité de panneaux (15, 16, 17) pare-soleil dans une direction vers le haut et dans une direction vers le bas du toit (11) du véhicule.

2. Appareil pare-soleil pour le véhicule (10) selon la revendication 1 comprenant en plus une boîte de stockage (40, 140) supportée au niveau de la partie d'extrémité arrière du rail de guidage (18), où la première partie de guidage (44a, 121a) inclut une première rainure de guidage (44a, 121a) formée dans la boîte de stockage, et la deuxième partie de guidage (42a, 121b) inclut une deuxième rainure de guidage (42a, 121b) formée dans la boîte de stockage de sorte à se positionner en-dessous de la première rainure de guidage (44a, 121a) dans la direction vers le haut-vers le bas du toit (11) du véhicule.

3. Appareil pare-soleil pour le véhicule (10) selon la revendication 2, dans lequel la partie de division inclut un élément de division (42) supporté en rotation autour d'un axe horizontal s'étendant dans une direction de largeur du toit (11) du véhicule et est doté de la deuxième rainure de guidage (42a), l'élément (42) de division formant la première rainure de guidage (44a) avec une partie de paroi de la boîte de stockage (40).

4. Appareil pare-soleil pour le véhicule (10) selon la revendication 3, dans lequel le rail de guidage (18) inclut une première rainure (20a) et une deuxième rainure (20b), qui sont agencées parallèlement l'une à l'autre dans la direction vers le haut-vers le bas du toit (11) du véhicule, la première rainure (20a) guide en coulissement la partie d'extrémité avant de chacun de la pluralité de panneaux (15, 16, 17) pare-soleil et est reliée au mécanisme de guidage (45), et la deuxième rainure (20b) guide de manière coulissante la partie d'extrémité arrière de chacun de la pluralité de panneaux (15, 16, 17) pare-soleil et est sélectivement reliée à la première rainure de guidage (44a) ou à la deuxième rainure de guidage (42a) par une rotation de l'élément de division (42).

5. Appareil pare-soleil pour le véhicule (10) selon la revendication 4, dans lequel la partie de division inclut un ressort sollicitant en rotation l'élément de division (42), et la première rainure de guidage (42a) fonctionne en tant que passage incliné (44) relié à la deuxième rainure (20b).

6. Appareil pare-soleil pour le véhicule (10) selon la revendication 2, dans lequel la partie de division inclut un élément de division supporté en rotation autour d'un axe horizontal s'étendant dans la direction de largeur du toit (11) du véhicule, la partie de division inclut un élément de division (50) pour former la première rainure de guidage (121a) et la deuxième rainure de guidage (121b) entre une partie de paroi de la boîte de stockage (140) et des surfaces (50a, 50b) supérieure et inférieure de l'élément de division (50).

7. Appareil pare-soleil pour le véhicule (10) selon la revendication 6, dans lequel le rail de guidage (18) inclut une partie (20) de rainure guidant en coulissement les parties d'extrémité avant et arrière de chacun de la pluralité de panneaux (15, 16, 17) pare-soleil, la partie (20) de rainure est reliée de manière sélective à la première rainure de guidage (121a) ou à la deuxième rainure de guidage (121b) par la rotation de l'élément de division (50), et la partie (20) de rainure est reliée au mécanisme de guidage (145).

8. Appareil pare-soleil pour le véhicule (10) selon la revendication 7, dans lequel la partie de division inclut un ressort (52) sollicitant en rotation l'élément de division (50) de sorte à relier la partie (20) de rainure et la deuxième rainure de guidage (121b).
